# EUROPEAN PATENT APPLICATION

(11) **EP 4 590 002 A1**
(43) Date of publication of application: **23.07.2025**
(21) Application number: 25150042.7
(22) Date of filing: 02.01.2025
(51) Int. Cl.: H04W 4/80, H04W 52/02, H04W 4/38

(54) **AMBIENT INTERNET OF THINGS COMMUNICATION FOR USER DEVICES**

(30) Priority: 16.01.2024 GB 202400559
(71) Applicant: Nokia Technologies Oy, 02610 Espoo (FI)
(72) Inventor: BARBU, Oana-Elena, c/o Nokia Denmark A/S, Aalborg (DK); KIILERICH PRATAS, Nuno Manuel, c/o Nokia Denmark A/S, Aalborg (DK); VEJLGAARD, Benny, Gistrup (DK); HARREBEK, Johannes, Aalborg (DK); SVENDSEN, Simon, Aalborg (DK)
(74) Representative: Nokia EPO representatives

(57) **Abstract**

Embodiments of the disclosure relate to devices, methods, apparatuses and a computer readable storage medium for ambient internet of things (A-IoT) communication for user device in radio resource control (RRC) inactive state. The method comprises: determining, at the user device, a detection window for the apparatus to detect a reply from an A-IoT device in an A-IoT session; and in accordance with a determination that the apparatus not being in a connected state is triggered, by a network node, to participate in the A-IoT session as a reader, detecting the reply from the A-IoT device within the detection window.

## Description

### FIELDS

Various example embodiments of the present disclosure generally relate to the field of telecommunication and in particular, to methods, devices, apparatuses and a computer readable storage medium for ambient internet of things (A-IoT) communication.

### BACKGROUND

Energy harvesting enabled communication services, also called A-IoT in the 3rd Generation Partnership Project (3GPP), have been widely used in various vertical industries including logistics, manufacture, transportation, energy industry etc. Enabling A-IoT devices, in both public and private networks would benefit the whole 5th generation (5G) ecosystem. Therefore, support of A-IoT using either battery-less terminal or terminal with limited energy storage capability (e.g., using a capacitor), could become a new requirement for the existing 3GPP technologies.

### SUMMARY

In a first aspect of the present disclosure, there is provided an apparatus. The apparatus comprises at least one processor; and at least one memory storing instructions that, when executed by the at least one processor, cause the apparatus at least to: determine a detection window for the apparatus to detect a reply from an A-IoT device in an A-IoT session; and in accordance with a determination that the apparatus not being in a connected state is triggered, by a network node, to participate in the A-IoT session as a reader, detect the reply from the A-IoT device within the detection window.

In a second aspect of the present disclosure, there is provided a method. The method comprises: determining, at the user device, a detection window for the apparatus to detect a reply from an A-IoT device in an A-IoT session; and in accordance with a determination that the apparatus not being in a connected state is triggered, by a network node, to participate in the A-IoT session as a reader, detecting the reply from the A-IoT device within the detection window.

In a third aspect of the present disclosure, there is provided an apparatus. The apparatus comprises means for determining a detection window for the apparatus to detect a reply from an A-IoT device in an A-IoT session; and means for detecting the reply from the A-IoT device within the detection window in accordance with a determination that the apparatus not being in a connected state is triggered, by a network node, to participate in the A-IoT session as a reader.

In a fourth aspect of the present disclosure, there is provided a computer readable medium. The computer readable medium comprises instructions stored thereon for causing an apparatus to perform at least the method according to the second aspect.

It is to be understood that the Summary section is not intended to necessarily identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates a signaling chart of an example process of A-IoT communication for user device in RRC inactive state according to some example embodiments of the present disclosure;
FIG. 3 illustrates a flowchart of a method implemented at an apparatus according to some example embodiments of the present disclosure;
FIG. 4 illustrates a simplified block diagram of a device that is suitable for implementing example embodiments of the present disclosure; and
FIG. 5 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

As used herein, the term "A-IoT" refers to a device without batteries or with limited energy storage capabilities. For A-IoT device, energy is provided by harvesting radio waves, light, motion, heat, or any other suitable source. A-IoT device can also be called zero-power terminals, near-zero power terminals, passive IoT device, ambient backscatter communication (AmBC) device, tag, etc. Compared with low-power and wide-coverage services, such as NB-IoT, enhance machine type communication (eMTC), A-IoT has lower complexity and lower power consumption, and is suitable for more application scenarios.

An A-IoT device may be capable of harnessing energy from wireless signals transmitted on specific carriers and/or bandwidths to charge a simple circuitry. Once activated, the A-IoT device may emit or reflect a signal that encodes at least its own ID. The typical system architecture surrounding an A-IoT device may include at least two of: an activator, an A-IoT device, or a reader.

The activator may be a device responsible for sending an activation signal targeted at waking up the A-IoT device. The A-IoT device has the ability to harness energy across a range of frequencies and listen for activation signals. Once such a signal is detected, the A-IoT device emits or reflects a signal that is specific to its radio ID. The reader is a device that listens for and detects the signals emitted or reflected by the A-IoT device. The reader may or may not be collocated with the activator.

There are different types of A-IoT devices, namely Type A, Type B and Type C. A-IoT devices of Type A do not have energy storage, independent signal generation or amplification capabilities and may perform backscattering transmission (BC). A-IoT devices of Type B have energy storage but lack independent signal generation. They also utilize backscattering transmission. The stored energy can be utilized for amplifying the reflected signals. A-IoT devices of Type C have both energy storage and independent signal generation capabilities. This means they have active RF components for transmission.

In other words, A-IoT devices may use two communication technologies, namely backscattering communication (i.e., Type A and Type B) and harvest then transmit (HTT) (i.e., Type C). Wireless powered backscatter communication systems convey energy to a wireless tag device. Then, the wirelessly powered tag reflects and modulates the incoming RF signal for communication with a tag reader. Wireless powered HTT communication systems deliver wireless energy to power communication devices. Then, the energy harvested by these devices is utilized for transferring their information to information-decoding receivers. BC does not incur the RF-to-direct current (RF-DC) conversion losses during the energy harvesting (EH) process. A BC transmitter does not convert the data to analog signals and does not amplify the signal. Therefore, it does not need digital-to-analog converter and power amplifier circuits, which are the most power consuming components in generic RF transceivers. However, range of BC is much smaller as compared to HTT systems, limited by doubly near-far-gain.

Moreover, complexity design targets for A-IoT devices are as follows:
A-IoT devices of Type A are designed to be comparable to UHF RFID in terms of complexity;
A-IoT devices of Type A have a complexity level that is less than or equal to A-IoT devices of Type B, and A-IoT devices of Type B have a complexity level that is less than or equal to A-IoT devices of Type C; and
A-IoT devices of Type C are designed to have a complexity level that is orders-of-magnitude lower than NB-IoT.

Some connectivity topologies for A-IoT networks and devices were defined during the study. In all these topologies, the A-IoT device may be provided with a carrier wave from other node(s) either inside or outside the topology. The links in each topology may be bidirectional or unidirectional. The mixture of indoor and outdoor placement of such nodes is regarded as a network implementation choice.

As an example, the A-IoT device may directly and bidirectionally communicate with a BS. The communication between the BS and the A-IoT device includes A-IoT data and/or signaling. This topology includes the possibility that the BS transmitting to the A-IoT device is different from the BS receiving from the A-IoT device.

As another example, the A-IoT device may communicates bidirectionally with an intermediate node between the A-IoT device and BS. In this topology, the intermediate node may be a relay, an IAB node, a UE, a repeater, etc. which is capable of A-IoT. The intermediate node may transfer the information between BS and the A-IoT device.

It is also possible that the A-IoT device transmits data/signaling to a BS and receives data/signaling from an assisting node; or the A-IoT device receives data/signaling from a BS and transmits data/signaling to an assisting node. In this topology, the assisting node can be a relay, an IAB, a UE, a repeater, etc. which is capable of A-IoT.

As still another example, the A-IoT device may communicate bidirectionally with a UE. The communication between UE and the A-IoT device may include A-IoT data and/or signaling.

Furthermore, the technical context of the invention further relates to Small Data Transmission (SDT). The following will provide a detailed description of this aspect.

SDT is a procedure allowing data and/or signaling transmission while remaining in RRC_INACTIVE state (i.e., without transitioning to RRC_CONNECTED state). SDT is enabled on a radio bearer basis and is initiated by the UE only if less than a configured amount of uplink (UL) data awaits transmission across all radio bearers for which SDT is enabled, the downlink (DL) Reference Signal Received Power (RSRP) is above a configured threshold, and a valid SDT resource is available. Maximum duration the SDT procedure can last is dictated by a SDT failure detection timer that is configured by the network.

SDT procedure is initiated with either a transmission over Random Access Channel (RACH) (configured via system information) or over Type 1 Configured Grant (CG) resources (configured via dedicated signaling in *RRCRelease*). The SDT resources can be configured on initial Bandwidth Part (BWP) for both RACH and CG. RACH and CG resources for SDT can be configured on either or both of normal Uplink (NUL) and Supplementary Uplink (SUL) carriers. The CG resources for SDT are valid only within the Primary Cell (Pcell) of the UE when the *RRCRelease* with suspend indication is received. CG resources are associated with one or multiple Synchronization Signal/ Blocks (SSBs). For RACH, the network can configure 2-step and/or 4-step Random Access (RA) resources for SDT. When both 2-step and 4-step RA resources for SDT are configured, the UE selects the RA type is not supported for SDT over RACH.

In some cases, once initiated, the SDT procedure is successfully completed after the UE is directed to RRC_IDLE (via *RRCRelease*) or to continue in RRC_INACTIVE (via *RRCRelease* or *RRCReject*) or to RRC_CONNECTED (via *RRCResume* or *RRCSetup*). In some other cases, once initiated, the SDT procedure is unsuccessfully completed upon cell re-selection, expiry of the SDT failure detection timer, a medium access control (MAC) entity reaching a configured maximum Physical random access channel (PRACH) preamble transmission threshold, an radio link control (RLC) entity reaching a configured maximum retransmission threshold, or expiry of SDT-specific timing alignment timer while SDT procedure is ongoing over CG and the UE has not received a response from the network after the initial Physical Uplink Shared Channel (PUSCH) transmission.

Upon unsuccessful completion of the SDT procedure, the UE transitions to RRC_IDLE. For SDT, network should not send *RRCReject* in response to *RRCResumeRequest*/*RRCResumeRequest1* if DL data over any radio bearer configured for SDT is transmitted.

The initial PUSCH transmission during the SDT procedure includes at least the Common Control Channel (CCCH) message. When using CG resources for initial SDT transmission, the UE can perform autonomous retransmission of the initial transmission if the UE does not receive confirmation from the network (dynamic UL grant or DL assignment) before a configured timer expires. After the initial PUSCH transmission, subsequent transmissions are handled differently depending on the type of resource used to initiate the SDT procedure.

When using CG resources, the network can schedule subsequent UL transmissions using dynamic grants or they can take place on the following CG resource occasions. The DL transmissions are scheduled using dynamic assignments. The UE can initiate subsequent UL transmission only after reception of confirmation (dynamic UL grant or DL assignment) for the initial PUSCH transmission from the network. For subsequent UL transmission, the UE cannot initiate re-transmission over a CG resource.

When using RACH resources, the network can schedule subsequent UL and DL transmissions using dynamic UL grants and DL assignments, respectively, after the completion of the RA procedure.

While the SDT procedure is ongoing, if data appears in a buffer of any radio bearer not enabled for SDT, the UE initiates a transmission of a non-SDT data arrival indication using *UEAssistanceInformation* message to the network and, if available, includes the resume cause.

SDT procedure over CG resources can only be initiated with valid UL timing alignment. The UL timing alignment is maintained by the UE based on a SDT-specific timing alignment timer configured by the network via dedicated signaling and, for initial CG-SDT transmission, also by DL RSRP of configured number of highest ranked SSBs which are above a configured RSRP threshold. Upon expiry of the SDT-specific timing alignment timer, the CG resources are released while maintaining the CG resource configuration.

Logical channel restrictions configured by the network while in the RRC_CONNECTED state and/or in an *RRCRelease* message for radio bearers enabled for SDT, if any, may be applied by the UE during the SDT procedure. The network may configure UE to apply Robust Header Compression (ROHC) continuity for SDT either when the UE initiates SDT in the PCell of the UE when the *RRCRelease* with suspend indication was received or when the UE initiates SDT in a cell of its Radio Network Architecture (RNA).

In some scenarios, various NR network elements/nodes are selected to participate in the activation and/or reading of one or more A-IoT devices. Some topologies involve an intermediate node, for example, a UE to activate the A-IoT device, read it, or report the reading results back to the gNB, or perform all such actions. The UE needs to be in the immediate proximity of the A-IoT device (up to 20m for activating, and 200m for reading).

Since proximity is key to a successful AIOT reading, the closest UE should be selected for serving in the session, regardless of the RRC state of the UE. In other words, physical proximity prevails over the RRC state of the UE, and the UE should be able to serve the A-IoT session even after transitioning to RRC-inactive. Therefore, how to enable an RRC-inactive UE to operate within the A-IoT session is expected to be solved.

Furthermore, an NR user device, having been configured to read an A-IoT device in RRC inactive state, must trigger an A-IoT low complexity receiver to detect one or more A-IoT replies. To comply with the RRC inactive state, a user device is expected to detect a reply from an A-IoT device within a minimum time window.

Therefore, the present disclosure proposes a solution of detecting the reply from the A-IoT device within a reduced detection window. In this solution, an apparatus (for example, a user device) determines a detection window for the apparatus to detect a reply from the A-IoT device in an A-IoT session. In accordance with a determination that the apparatus not being in a connected state is triggered, by a network node, to participate in the A-IoT session as a reader, the apparatus detects the reply from the A-IoT device within the detection window.

Herein the phrase "not being in a connected state" is to be understood to refer to a state in which the apparatus is in an inactive state or in an idle state.

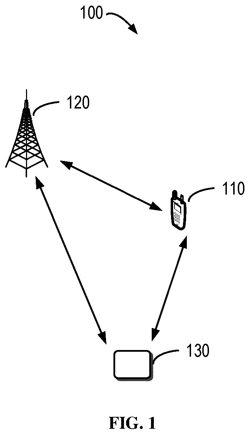

FIG. 1 illustrates an example communication environment 100 in which example embodiments of the present disclosure can be implemented. As shown in FIG. 1, the communication environment 100 may include a user device 110, a network node 120 and a A-IoT device 130. The user device 110 may communicate with the network node 120 and the A-IoT device 130. The user device 110 may be the terminal device as defined above.

In some scenarios, the A-IoT device 130 may be based on energy harvesting and may operate in a passive mode and harvest energy from both 3GPP and non-3GPP devices. For example, the A-IoT device 130 may use energy harvested from wireless radio waves, solar/light or any other form of energy that can be harvested in its deployment scenario and may be expected to operate with ultra-low power in the range from tens of microwatts to hundreds of microwatts.

As an example, the A-IoT device 130 may harvest energy and then use an active circuit to transmit data like a transmitter. As another example, the A-IoT device 130 may operate as a passive device and use backscattering to transmit information.

In some scenarios, the A-IoT device 130 may operate as a tag. The network node 120 may operate as a RAN device (e.g., a gNB, a BS or an eNB). The user device 110 may operate as a radio terminal device (e.g., a UE), which may act as an activator and/or a reader of the A-IoT device 130 in an A-IoT scenario. In some embodiments, the network node 120 may communicate with the A-IoT device 130, for example, the network node 120 may be considered as an activator or a reader of the A-IoT device 130.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

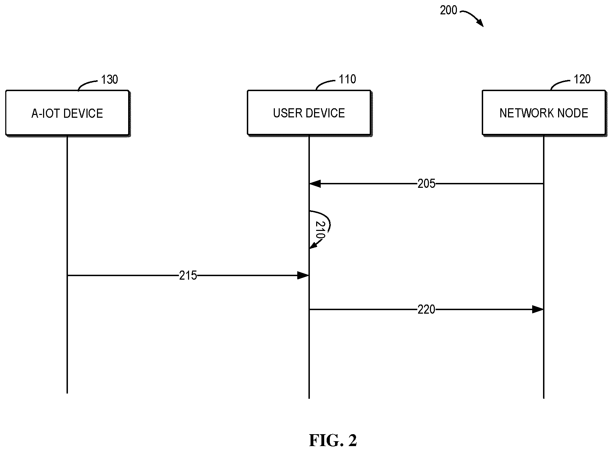

Reference now is made to FIG. 2, which illustrates a signaling chart 200 of an example process of A-IoT communication for user device in RRC inactive state according to some example embodiments of the present disclosure. For the purposes of discussion, the signaling chart 200 will be discussed with reference to FIG. 1, for example, by using the user device 110, a network node 120 and an A-IoT device 130.

As shown in FIG. 2, the network node 120 transmits (205) a paging message to trigger the user device 110 in an inactive state to participate in an A-IoT session. In some example embodiments, the user device 110 may obtain, from the paging message, a configuration associated with participating in the A-IoT session for the user device 110 in the inactive state. It is also possible that the configuration for the user device 110 to participate in the A-IoT session may be performed by the network node 120 when the user device 110 is transitioning to the inactive state, for example, via a RRC release message.

In some example embodiments, the paging message and/or the configuration associated with participating in the A-IoT session may indicate an indication that the user device 110 acts as a reader in the A-IoT session. Alternatively, or in addition, the paging message and/or the configuration may indicate an identifier of the A-IoT device in the A-IoT session and/or an identifier of the A-IoT session in which the user device 110 will participate.

It is also possible that the paging message and/or the configuration may indicate resources in time domain or frequency domain or both domains, on which the user device 110 is expected to receive the reply from the A-IoT device.

As a reader, the user device may be requested to report to the network node 120, the reply received from the A-IoT device. Thus, the paging message and/or the configuration may indicate a configuration for the user device 110 to report the detected reply. For example, the paging message may indicate that the user device 110 should behave as a reader and then report using either 2-step RACH SDT, 4-step RACH SDT or CG-SDT.

Based on the paging message and/or the configuration associated with participating in the A-IoT session, the user device 110 may be triggered (210) to participate in the A-IoT session as a reader.

It is to be understood that the user device 110 may also be configured as being an activator in the A-IoT session. Correspondingly, for the user device 110 acting as an activator in the A-IoT session, the paging message and/or the configuration may also indicate, for example, resources in time and/or frequency domain on which the user device 110is allowed to transmit an activation signal for the A-IoT session.

As described above, the user device 110, having been configured to read an A-IoT device in RRC inactive state, may trigger an A-IoT low complexity receiver to detect the one/more AIOT replies. Thus, to comply with the RRC inactive state the user device 110 needs to determine a detection window for detecting the reply from the A-IoT device 130 in the A-IoT session.

As an option, the user device 110 may determine the detection window when the user device 110 is in the connected state. As another option, the user device 110 may determine the detection window when the user device 110 is in an inactive state.

For determining the detection window, the user device 110 may collect receive samples with a periodicity T for a first search window, Wmax milliseconds (ms). In some example embodiments, the first search window has the maximum duration in time that the user device 110 can select. In some example embodiments, the user device 110 may remove the contribution of the activation signal either by interference cancellation methods or by dropping early samples.

After that, the user device 110 may determine whether at least one signal from the A-IoT device 130 is detected within the receive samples. For example, the user device 110 may generate a first vector r based on the receive samples within the search window and perform a convolution operation to the first vector with a transmit signal (Tx) associated with the A-IoT device 130, to obtain a convolved first vector t(x). For example, the transmit signal may be regenerated by the user device 110 locally from the A-IoT.

By assessing the envelope of the convolution and identifying a peak pattern or conversely an Additive White Gaussian Noise (AWGN) like pattern, the user device 110 may determine whether at least one signal from the A-IoT device 130 is detected within the receive samples.

If the user device 110 determines that at least one signal from the A-IoT device 130 is detected within the receive samples, the user device 110 may determine a second search window s, which may be obtained by reducing the first search window. That is, the second search window may have a size corresponding to collecting a portion of receive samples.

After determining the second search window, the user device 110 may generate a second vector based on the portion of receive samples. The second vector may be considered as a sub-vector of the first vector and may be denoted as r_s. The user device 110 may further perform convolution operation to the second vector r_s with the convolved first vector t(x), to determine whether a signal from the A-IoT device is detected within the second search window s.

If the user device 110 determines that the signal from the A-IoT device 130 is detected within the second search window, the user device 110 may determine the second search window s as the detection window. In some embodiments, the above process may be repeated until the determined search window s is the minimum window for which the detection is successful.

As described above, the process for a reader to determine the search window may periodically (for example, during RRC connected, or in RRC inactive) run the method as below.

**Table 1**

| | | |
|---|---|---|
| Initialize search window (i.e., the first search window) Wmax e.g., to the CP duration. This search window may be a maximum search window. | | |
| Initialize the periodicity T for the tunning, depending on: | | |
| | - whether the user device 110 is RRC connected (T1) or inactive (T2) e.g.: T1<<T2. | |
| | - The mobility profile of the user device 110 e.g., decrease periodicity T with the increase in speed. | |
| For each A-IoT device with ID x = 1:X and every T ms: | | |
| | 1. Collect maximum number of receive samples within Wmax into vector r | |
| | 2. Convolve vector r with tx signal for AIOT ID x, also called t(x). | |
| | 3. If a reply of A-IoT device is detected, then: | |
| | | a. Using a sliding window of decreasing size s = 1:Wmax |
| | | b. Retain the samples s from signal r into subvector r_s |
| | | c. Convolve r_s with t(x) and attempt a detection of a reply of A-IoT device |
| | | d. Select the minimum s for which the detection is successful. |
| | 4. Return s for each AIOT ID x. | |
| | 5. During RRC inactive, set search window size W to s. | |

In this way, the user device 110 may determine the detection window for detecting the reply from the A-IoT device 130 in the A-IoT session. By decreasing the detection window, the complexity of convolution operation may be reduced and therefore the complexity of the reading for the user device 110 may also be reduced.

In some example embodiments, the user device 110 may detect (and receive) a reply from the A-IoT device 130 within the determined detection window. If the user device 110 receives (215) the reply from the A-IoT device 130, the user device 110 may transfer (220) the reply to the network node 120. It is to be understood that the A-IoT device 130 may transmit a reply when the A-IoT device 130 is activated by the network node 120, or by the user device 110 (when the user device 110 acts also as an activator).

Based on the solution of the present disclosure, the complexity for reading the A-IoT replies can be reduced.

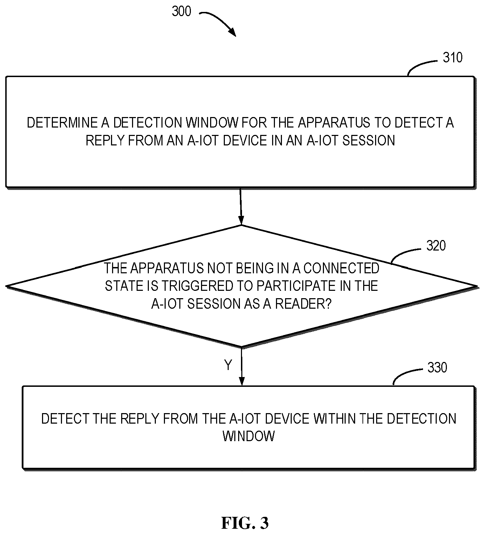

FIG. 3 shows a flowchart of an example method 300 implemented at an apparatus in accordance with some example embodiments of the present disclosure. For the purpose of discussion, the method 300 will be described from the perspective of the user device 110 in FIG. 1.

At block 310, the user device 110 determines a detection window for the apparatus to detect a reply from an A-IoT device in an A-IoT session.

At block 320, if the user device 110 not being in a connected state is triggered, by a network node, to participate in the A-IoT session as a reader, at block 330, the user device 110 detects the reply from the A-IoT device within the detection window.

In some example embodiments, the method 300 further comprises: collecting receive samples with a periodicity for a first search window; and in accordance with a determination that at least one signal from the A-IoT device is detected within the receive samples, determining whether a signal from the A-IoT device is detected within a second search window having a size corresponding to collecting a portion of receive samples; and in accordance with a determination that the signal from A-IoT device is detected within the second search window, determining the second search window as the detection window.

In some example embodiments, the method 300 further comprises: generating a first vector based on the receive samples within the search window; and determining whether the at least one signal from the A-IoT device is detected within the receive samples by performing a convolution operation to the first vector with a transmit signal associated with the A-IoT device.

In some example embodiments, the method 300 further comprises: generating a second vector based on the portion of receive samples; and determining whether the signal from the A-IoT device is detected within the second search window by performing a convolution operation to the second vector with the convolved first vector; and in accordance with a determination, based on the convolved second vector, that the signal from the A-IoT device is detected within the second search window, determining that the reply from the A-IoT device is detected within the second search window.

In some example embodiments, the method 300 further comprises: determining the detection window in the inactive state or in an active state of the apparatus.

In some example embodiments, the time period for the apparatus to be in the inactive state is larger than the time period for the apparatus to be in the active state.

In some example embodiments, the method 300 further comprises: receiving, from the network node, a paging message to trigger the apparatus in the inactive state to participate in the A-IoT session; obtaining a configuration associated with participating in the A-IoT session for the apparatus in the inactive state; and detecting the reply from the A-IoT device based on the paging message and the configuration.

In some example embodiments, the paging message and/or the configuration indicates at least one of: an indication that the apparatus acts as a reader in the A-IoT session, an identifier of the A-IoT device, resources in time domain or frequency domain or both domains, on which the apparatus is expected to receive the reply from the A-IoT device, or a configuration for the apparatus to report the detected reply.

In some example embodiments, the method 300 further comprises: transmitting the reply to the network node via a data transmission while remaining in an inactive state.

In some example embodiments, an apparatus capable of performing the method 300 (for example, the user device 110 in FIG. 1) may comprise means for performing the respective operations of the method 300. The means may be implemented in any suitable form. For example, the means may be implemented in a circuitry or software module. The apparatus may be implemented as or included in the user device 110 in FIG. 1.

In some example embodiments, the apparatus comprises means for determining a detection window for the apparatus to detect a reply from an A-IoT device in an A-IoT session; and means for, in accordance with a determination that the apparatus not being in a connected state is triggered, by a network node, to participate in the A-IoT session as a reader, detecting the reply from the A-IoT device within the detection window.

In some example embodiments, the apparatus further comprises: means for collecting receive samples with a periodicity for a first search window; means for, in accordance with a determination that at least one signal from the A-IoT device is detected within the receive samples, determining whether a signal from the A-IoT device is detected within a second search window having a size corresponding to collecting a portion of receive samples; and means for, in accordance with a determination that the signal from A-IoT device is detected within the second search window, determining the second search window as the detection window.

In some example embodiments, the apparatus further comprises: means for generating a first vector based on the receive samples within the search window; and means for determining whether the at least one signal from the A-IoT device is detected within the receive samples by performing a convolution operation to the first vector with a transmit signal associated with the A-IoT device.

In some example embodiments, the apparatus further comprises: means for generating a second vector based on the portion of receive samples; and means for determining whether the signal from the A-IoT device is detected within the second search window by performing a convolution operation to the second vector with the convolved first vector; and means for, in accordance with a determination, based on the convolved second vector, that the signal from the A-IoT device is detected within the second search window, determining that the reply from the A-IoT device is detected within the second search window.

In some example embodiments, the apparatus further comprises: means for determining the detection window in the inactive state or in an active state of the apparatus.

In some example embodiments, the time period for the apparatus to be in the inactive state is larger than the time period for the apparatus to be in the active state.

In some example embodiments, the apparatus further comprises: means for receiving, from the network node, a paging message to trigger the apparatus in the inactive state to participate in the A-IoT session; means for obtaining a configuration associated with participating in the A-IoT session for the apparatus in the inactive state; and means for detecting the reply from the A-IoT device based on the paging message and the configuration.

In some example embodiments, the paging message and/or the configuration indicates at least one of: an indication that the apparatus acts as a reader in the A-IoT session, an identifier of the A-IoT device, resources in time domain or frequency domain or both domains, on which the apparatus is expected to receive the reply from the A-IoT device, or a configuration for the apparatus to report the detected reply.

In some example embodiments, the apparatus further comprises: means for transmitting the reply to the network node via a data transmission while remaining in an inactive state.

In some example embodiments, the apparatus further comprises means for performing other operations in some example embodiments of the method 300 or the user device 110. In some example embodiments, the means comprises at least one processor; and at least one memory storing instructions that, when executed by the at least one processor, cause the performance of the apparatus.

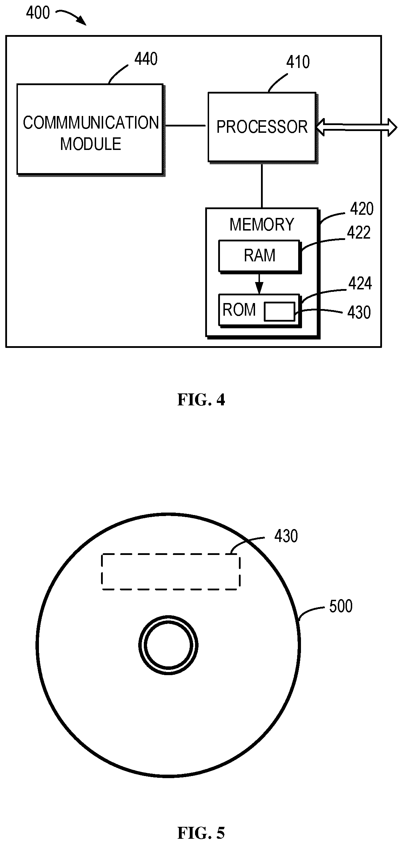

FIG. 4 is a simplified block diagram of a device 400 that is suitable for implementing example embodiments of the present disclosure. The device 400 may be provided to implement a communication device, for example, the user device 110, the network node 120, or the A-IoT device 130 as shown in FIG. 1. As shown, the device 400 includes one or more processors 410, one or more memories 420 coupled to the processor 410, and one or more communication modules 440 coupled to the processor 410.

The communication module 440 is for bidirectional communications. The communication module 440 has one or more communication interfaces to facilitate communication with one or more other modules or devices. The communication interfaces may represent any interface that is necessary for communication with other network elements. In some example embodiments, the communication module 440 may include at least one antenna.

The processor 410 may be of any type suitable to the local technical network and may include one or more of the following: general purpose computers, special purpose computers, microprocessors, digital signal processors (DSPs) and processors based on multicore processor architecture, as non-limiting examples. The device 400 may have multiple processors, such as an application specific integrated circuit chip that is slaved in time to a clock which synchronizes the main processor.

The memory 420 may include one or more non-volatile memories and one or more volatile memories. Examples of the non-volatile memories include, but are not limited to, a Read Only Memory (ROM) 424, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 422 and other volatile memories that will not last in the power-down duration.

A computer program 430 includes computer executable instructions that are executed by the associated processor 410. The instructions of the program 430 may include instructions for performing operations/acts of some example embodiments of the present disclosure. The program 430 may be stored in the memory, e.g., the ROM 424. The processor 410 may perform any suitable actions and processing by loading the program 430 into the RAM 422.

The example embodiments of the present disclosure may be implemented by means of the program 430 so that the device 400 may perform any process of the disclosure as discussed with reference to FIG. 2 to FIG. 3. The example embodiments of the present disclosure may also be implemented by hardware or by a combination of software and hardware.

In some example embodiments, the program 430 may be tangibly contained in a computer readable medium which may be included in the device 400 (such as in the memory 420) or other storage devices that are accessible by the device 400. The device 400 may load the program 430 from the computer readable medium to the RAM 422 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 5 shows an example of the computer readable medium 500 which may be in form of CD, DVD or other optical storage disk. The computer readable medium 500 has the program 430 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable subcombination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising:
means for determining a detection window for the apparatus to detect a reply from an ambient internet of things, A-IoT, device in an A-IoT session; and
means for detecting the reply from the A-IoT device within the detection window, in accordance with a determination that the apparatus not being in a connected state is triggered, by a network node, to participate in the A-IoT session as a reader.

2. The apparatus of claim 1, wherein the apparatus is configured to:
collect receive samples with a periodicity for a first search window;
in accordance with a determination that at least one signal from the A-IoT device is detected within the receive samples, determine whether a signal from the A-IoT device is detected within a second search window having a size corresponding to collecting a portion of receive samples; and
in accordance with a determination that the signal from A-IoT device is detected within the second search window, determine the second search window as the detection window.

3. The apparatus of claim 2, wherein the apparatus is configured to:
generate a first vector based on the receive samples within the search window; and
determine whether the at least one signal from the A-IoT device is detected within the receive samples by performing a convolution operation to the first vector with a transmit signal associated with the A-IoT device.

4. The apparatus of claim 3, wherein the apparatus is configured to:
generate a second vector based on the portion of receive samples; and
determine whether the signal from the A-IoT device is detected within the second search window by performing a convolution operation to the second vector with the convolved first vector; and
in accordance with a determination, based on the convolved second vector, that the signal from the A-IoT device is detected within the second search window, determine that the reply from the A-IoT device is detected within the second search window.

5. The apparatus of any of claims 2-4, wherein the apparatus is configured to:
determine the detection window in an inactive state or in an active state of the apparatus.

6. The apparatus of claim 5, wherein the periodicity for the apparatus to be used in the inactive state is larger than the periodicity for the apparatus to be used in the active state.

7. The apparatus of any of claims 1-6, wherein the apparatus is configured to:
receive, from the network node, a paging message to trigger the apparatus in the inactive state to participate in the A-IoT session;
obtain a configuration associated with participating in the A-IoT session for the apparatus in the inactive state; and
detect the reply from the A-IoT device based on the paging message and the configuration.

8. The apparatus of claim 7, wherein the paging message and/or the configuration indicates at least one of:
an indication that the apparatus acts as a reader in the A-IoT session,
an identifier of the A-IoT device,
resources in time domain or frequency domain or both domains, on which the apparatus is expected to receive the reply from the A-IoT device, or
a configuration for the apparatus to report the detected reply.

9. The apparatus of any of claims 1-8, wherein the apparatus is configured to:
transmit the reply to the network node via a data transmission while remaining in an inactive state.

10. The apparatus of any of claims 1-9, wherein the apparatus is a terminal device.

11. A method comprising:
determining a detection window at an apparatus to detect a reply from an ambient internet of things, A-IoT, device in an A-IoT session; and
in accordance with a determination that the apparatus not being in a connected state is triggered, by a network node, to participate in the A-IoT session as a reader, detecting the reply from the A-IoT device within the detection window.

12. The method of claim 11, wherein the method further comprises:
collecting receive samples with a periodicity for a first search window;
in accordance with a determination that at least one signal from the A-IoT device is detected within the receive samples, determining whether a signal from the A-IoT device is detected within a second search window having a size corresponding to collecting a portion of receive samples; and
in accordance with a determination that the signal from A-IoT device is detected within the second search window, determining the second search window as the detection window.

13. The method of any of claims 11-12, wherein the method further comprises:
receiving, from the network node, a paging message to trigger the apparatus in the inactive state to participate in the A-IoT session;
obtaining a configuration associated with participating in the A-IoT session for the apparatus in the inactive state; and
detecting the reply from the A-IoT device based on the paging message and the configuration.

14. The method of any of claims 11-13, wherein the method further comprises:
transmitting the reply to the network node via a data transmission while remaining in an inactive state.

15. A computer readable medium comprising instructions stored thereon for causing an apparatus at least to perform the method of any of claims 11-14.
